(19) Europäisches Patentamt
European Patent Office
Office européen des brevets

(11) **EP 3 054 152 B1**

(12) **EUROPEAN PATENT SPECIFICATION**

(45) Date of publication and mention
of the grant of the patent:
**25.07.2018 Bulletin 2018/30**

(51) Int Cl.:
***F03D 7/02*** *(2006.01)*

(21) Application number: **16153794.9**

(22) Date of filing: **02.02.2016**

(54) **WIND POWER GENERATION APPARATUS**

VORRICHTUNG ZUR WINDKRAFTERZEUGUNG

APPAREIL DE PRODUCTION D'ÉNERGIE ÉOLIENNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.02.2015 JP 2015021712**

(43) Date of publication of application:
**10.08.2016 Bulletin 2016/32**

(73) Proprietor: **Hitachi, Ltd.
Tokyo 100-8280 (JP)**

(72) Inventors:
• **KOBATA, Norihito
Tokyo, 100-8280 (JP)**
• **KAKUYA, Hiromu
Tokyo, 100-8280 (JP)**
• **KIYOKI, Souichiro
Tokyo, 100-8280 (JP)**

(74) Representative: **MERH-IP Matias Erny Reichl
Hoffmann
Patentanwälte PartG mbB
Paul-Heyse-Strasse 29
80336 München (DE)**

(56) References cited:
**EP-A2- 2 292 928     US-A1- 2010 303 622
US-A1- 2012 087 792   US-A1- 2014 297 052**

**Description**

BACKGROUND OF THE INVENTION

1. Field of the Invention

The present invention relates to a wind power generation apparatus, and more particularly, to a technology for reducing generation of vibration in a windmill component such as a tower.

2. Description.of the Related Art

In recent years, so as to prevent global warming and achieve energy security, wind power generation apparatuses (hereinafter also referred to as windmills in some cases) have been introduced. A wind power generation apparatus normally has a structure in which heavy components such as blades that capture wind energy are placed on an upper portion of a tower of several tens of meters in height. Therefore, due to the force generated in the blades by wind, vibration is caused in the wind power generation apparatus, or particularly in the tower. This vibration becomes the cause of increase in fatigue loads of the structural members, and might shorten the life of the windmill components.

In recent years, wind power generation apparatuses have rapidly become larger in size, and the force to be received from wind has increased accordingly. Therefore, the influence of the above mentioned vibration also tends to become larger. In a floating windmill formed by placing a wind power generation apparatus on a floating structure, the windmill is not secured to the ground or the seabed, and therefore, the influence of vibration becomes more conspicuous. In this aspect, reducing vibration in a wind power generation apparatus is a critical technical problem.

To counter the above problem, technologies have been developed as disclosed in WO-05/83266-A, for example. WO-05/83266-A discloses a wind power generation apparatus that has a pitch angle control mechanism for controlling the pitch angle of a windmill blade in accordance with a blade pitch angle command. This wind power generation apparatus includes: an accelerometer that is attached to a nacelle and detects acceleration of vibration of the nacelle; and an active vibration control unit that calculates, based on the acceleration detected by the accelerometer, the pitch angle of the windmill blade to generate a thrust force in the windmill blade so as to cancel the vibration of the nacelle, and outputs a blade pitch angle command to the pitch angle control mechanism.

US 2014/0297052 A1 relates to a method of operating a wind turbine. The method comprises determining the speed of the rotor, determining the fore-aft speed of the nacelle, and calculating a difference between the determined speed of the rotor and a predefined speed of reference of the rotor. After, pitch commands are obtained by performing a PID control of this calculated difference of speeds.

US 2012/0087792 A1 relates to a system and method for an emergency feathering control of a wind turbine. A variable pitch rate controller generates commands to drive an AC servo motor for blade feathering. The commands from the controller vary the pitch rate of the blades during feathering in an emergency to a second pitch rate that is different from a first pitch rate.

US 2010/0303622 A1 relates to a method for the emergency braking of a wind power plant, in which at least one rotor blade is adjusted into its feathering position.

EP 2 292 928 A2 relates to a method of controlling a wind turbine, tracking a power curve including a nominal operational region and sub-nominal operational regions.

SUMMARY OF THE INVENTION

According to WO-05/83266-A, the accelerometer attached to the nacelle detects the acceleration of vibration of the nacelle, and, based on the acceleration, the active vibration control unit calculates the pitch angle of the windmill blade to generate a thrust force in the windmill blade so as to cancel the vibration of the nacelle. The active vibration control unit outputs the calculated pitch angle as a blade pitch angle command to the pitch angle control mechanism, to control the pitch angle of the windmill blade. In this manner, forward and backward vibration of the nacelle can be controlled to a certain degree.

Meanwhile, vibration is generated in a windmill due to variation in the thrust force the windmill receives from wind, as the wind velocity changes or the blade pitch angle is adjusted. That is, adjustment of the pitch angle might generate exciting force that will cause vibration of the windmill. Therefore, so as to effectively reduce vibration and reduce fatigue loads, the pitch angle is preferably adjusted to reduce generation of vibration.

In this regard, the technology disclosed in WO-05/83266-A can generate such a thrust force as to cancel vibration, by adjusting the pitch angle after generation of vibration. However, WO-05/83266-A does not teach any method of reducing the cause of vibration before the vibration control process. That is, in the pitch angle adjusting operation before the accelerometer senses a vibration acceleration, reducing vibration (or generation of vibration) might not be sufficiently taken into consideration. At present, the pitch angle is controlled based on a pitch angle target value, and the pitch angle adjustment causes vibration in some cases. So as to increase reliability, other parameters are preferably taken into consideration during control operations. The present invention aims to provide a wind power generation apparatus with increased reliability.

To solve the above problems, a wind power generation apparatus according to the present invention includes a blade that rotates when receiving wind. In this wind power generation apparatus, the blade changes a pitch angle change rate, using a pitch angle change rate command value correlated to the difference between a pitch angle target value and the current pitch angle, in a manner set out in claim 1. According to the present invention, a wind power generation apparatus with increased reliability can be provided.

BRIEF DESCRIPTION OF THE DRAWINGS

Fig. 1 is a diagram schematically showing the structure of a wind power generation apparatus according to an embodiment of the present invention;
Fig. 2 is a block diagram showing part of the controller of the wind power generation apparatus according to the embodiment of the present invention;
Fig. 3 is a diagram for explaining the force acting on the blades of the wind power generation apparatus according to the embodiment of the present invention;
Figs. 4A and 4B are diagrams showing the output target value and the rotation speed target value of the wind power generation apparatus according to the embodiment of the present invention; and
Figs. 5A through 5E are diagrams for explaining the differences to be made when the wind power generation apparatus according to the embodiment of the present invention performs operations according to the present invention.

DESCRIPTION OF THE PREFERRED EMBODIMENTS

The following is a description of an embodiment of the present invention, with reference to the accompanying drawings. It should be understood that the embodiment described below is merely an example, and embodiments of the present invention are not limited to the specific embodiment described below.

[First Embodiment]

(Outline of First Embodiment)

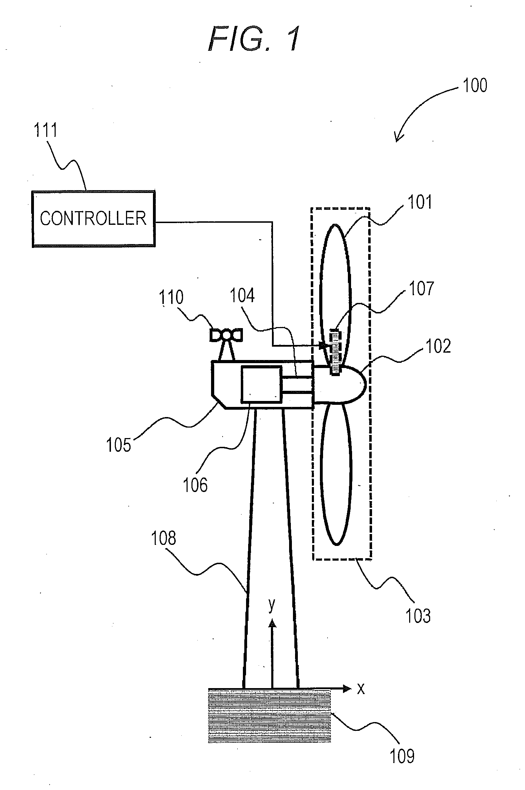

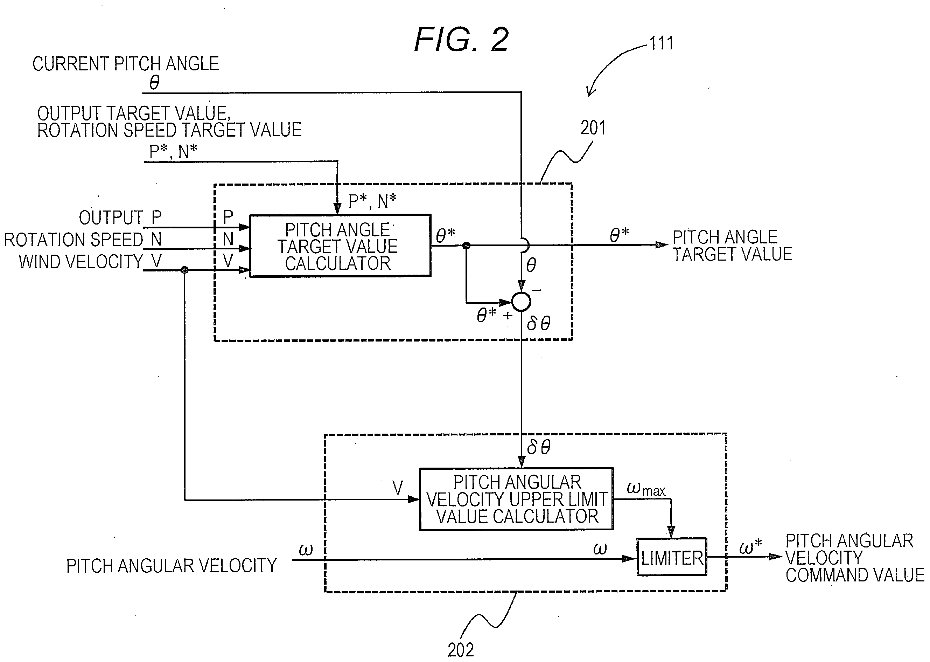

Referring first to Figs. 1 and 2, a first embodiment of a wind power generation apparatus according to the present disclosure is described.

(Overall Structure)

Fig. 1 schematically shows the structure of a wind power generation apparatus 100 of the first embodiment. As shown in Fig. 1, the wind power generation apparatus 100 of this embodiment includes a rotor 103, a nacelle 105, and a tower 108. The tower 108 rotatively supports the nacelle 105, and supports the loads of the nacelle 105 and the rotor 103. The rotor 103 includes blades 101 and a hub 102 that connects and supports the blades 101. The rotor 103 is connected to a power generator 106 in the nacelle 105 via a main shaft 104. As the blades 101 receive wind, the rotor 103 rotates, so that the power generator 106 connected to the rotor 103 by the main shaft 104 is rotated. As a result, electrical power can be generated from wind energy.

Each of the blades 101 includes a pitch actuator 107 that can change the positional relationship between the blade 101 and the hub 102, or the blade angle called a pitch angle. The pitch angle of the blade 101 is changed with the use of the pitch actuator 107, so that the amount of energy to be obtained from wind can be changed. With this, the power to be generated from the wind power generation apparatus 100 can be controlled, while the rotation speed of the rotor 103 is controlled in a wide wind velocity range.

The nacelle 105 is supported at a predetermined altitude by the tower 108, and the tower 108 is mounted on a base 109. The base 109 is formed in a predetermined position on the ground or the ocean. Although the rotor 103 and the power generator 106 are directly connected by the main shaft 104 in Fig. 1, a speed increasing device that increases the rotation speed of the rotor 103 and inputs the increased speed to the power generator 106 may also be provided.

(Explanation of the Pitch Angle Control Mechanism)

The wind power generation apparatus 100 also includes an anemometer 110 placed on the nacelle 105, and a controller 111. The controller 111 adjusts the pitch actuator 107, to control the power to be generated. The controller 111 includes a pitch angle target value calculating unit that outputs at least a pitch angle target value, and a pitch angular velocity control unit that reduces generation of vibration in the wind power generation apparatus by setting an upper limit value $\omega_{max}$ on the pitch angle change rate (hereinafter also referred to as the pitch angular velocity) according to the present invention. The pitch angle target value calculating unit and the pitch angular velocity control unit are provided in the form of programs. Although the controller 111 is installed outside the nacelle 105 or the tower 108 in Fig. 1, the configuration is not limited to that. For example, the controller 111 may be installed in a predetermined position inside or outside the nacelle 105 or the tower 108, or may be installed outside the wind power generation apparatus 100.

The anemometer 110 is a wind velocity detecting unit, and calculates and outputs the mean wind velocity during a predetermined period of time. The wind velocity detection is not necessarily conducted through actual measurement with an anemometer or the like, but the wind velocity may be predicted or calculated with the use of other measurement values or the like. Although the wind velocity detected by the anemometer 110 will be written as the wind velocity V in the description below, the wind velocity indicates the mean wind velocity during a predetermined period of time in this embodiment. However, the wind velocity to be used in each control operation in embodiments of the present invention does not necessarily be the mean wind velocity during a predetermined period of time. Although an anemometer is used as the wind velocity in this embodiment, any means other than an anemometer may be used as long as it can detect wind velocities or estimate wind velocities through calculations or the like. Although the anemometer 110 is placed on the nacelle 105 in this embodiment, the anemometer 110 may not be placed on the nacelle 105, and may be placed on the tower 108 or the rotor 103, for example. Further, each wind power generation apparatus may not include the anemometer 110, but only one of the windmills constituting a wind farm may include the anemometer 110, and the rest of the windmills may use the data supplied from the one windmill. Alternatively, the wind power generation apparatus 100 may include two or more of the above described wind velocity detecting units.

(Outline of Pitch Angle Control)

Fig. 2 is a block diagram for explaining part of the controller 111 installed in the wind power generation apparatus 100 according to this embodiment.

The controller 111 includes at least a pitch angle target value calculating unit 201 and a pitch angular velocity control unit 202. The pitch angle target value calculating unit 201 and the pitch angular velocity control unit 202 calculate a pitch angle target value $\theta^*$ and a pitch angular velocity command value $\omega^*$, respectively.

The pitch angle target value calculating unit 201 calculates the pitch angle target value $\theta^*$ based on the wind velocity V detected by the anemometer 110 and a rotation speed N or an output P of the wind power generation apparatus 100 (or the power generator 106), so that the wind power generation apparatus 100 outputs a predetermined rotation speed target value $N^*$ or an output target value $P^*$. A pitch angle change amount $\delta\theta$ ($\delta\theta = \theta^* - \theta$) is further calculated from the calculated pitch angle target value $\theta^*$ and the current pitch angle $\theta$. The pitch angular velocity control unit 202 outputs the command value $\omega^*$ equivalent to the change amount $\delta\theta$ (the command value $\omega^*$ will be referred to as the pitch angle change rate command value or will be also referred to simply as the command value), to the pitch actuator 107. Sensors (not shown) that detect the current pitch angle $\theta$, the output P, and the rotation speed N are provided in the nacelle 105, and the outputs of these sensors are input to the pitch angle target value calculating unit 201. The current pitch angle is not necessarily the latest pitch angle, and may be a slightly old pitch angle. Although the command value equivalent to the difference $\delta\theta$ is output in this embodiment, any other value correlated to the difference may be output. With this, control can be performed with the use of the pitch angle change rate command value correlated to a movement distance that is the difference between the pitch angle target value $\theta^*$ and the current pitch angle $\theta$. Accordingly, the pitch angle change rate can be changed in accordance with the length of the movement distance. If the movement distance is short, control can be performed so as to cause slow movement and so as not to generate vibration. If the movement distance is long, the opposite control can be performed. The pitch angular velocity control unit 202 calculates the upper limit value $\omega_{max}$ of the pitch angular velocity based on the wind velocity V measured by the anemometer 110. The anemometer 110 calculates the mean wind velocity during a predetermined period of time, and, at the time of the calculation of the upper limit value $\omega_{max}$, may use the mean wind velocity obtained through the latest measuring operations. The anemometer 110 may predict a future wind velocity or a wind velocity change in a short time by performing extrapolation with the mean wind velocity obtained through the past few measuring operations (two measuring operations, for example), and calculate the upper limit value of the pitch angular velocity in accordance with the predicted value. By doing so, the anemometer 110 can calculate an appropriate value for the wind velocity that is changing. Further, in a preferred embodiment, the latest (mean) wind velocity (or only the latest (mean) wind velocity) may be used. In such a case, the latest information can be reflected. Accordingly, the actual environment can be most effectively reflected, and control can be performed with higher precision.

The pitch actuator 107 changes the pitch angle θ based on the pitch angle target value θ* output from the pitch angle target value calculating unit 201. At this point, the pitch actuator 107 can also change the speed of movement from the current pitch angle θ to the pitch angle target value θ* (pitch angular velocity ω). The pitch actuator 107 further operates the blades 101 toward the pitch angle target value θ* at an angular velocity that does not exceed the pitch angular velocity upper limit value $\omega_{max}$. However, during the process to reach the pitch angle target value θ*, the pitch angular velocity slightly changes, and might momentarily exceed the upper limit value at least due to such a mechanical response.

Specifically, the pitch actuator 107 may be an electric motor, a combination of an electric motor and a decelerator, or a hydraulic cylinder, for example.

(Relationship Between the Pitch Angular Velocity and Generation of Vibration)

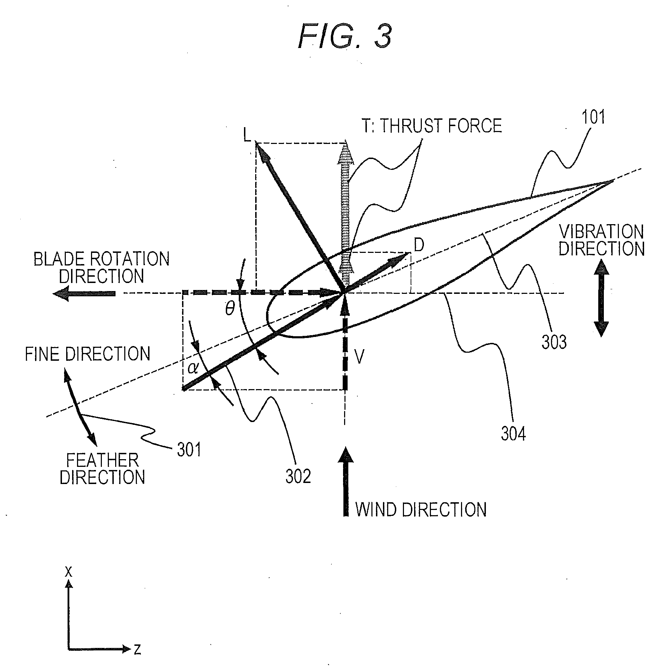

The mechanism for reducing generation of vibration in the above described structure is now described. Referring first to Fig. 3, the relationship between the pitch angular velocity ω and variation in thrust force T that is the source of vibration of the wind power generation apparatus 100 is described.

Fig. 3 is a diagram showing a cross-section of a blade 101 in a turning radius position, seen from the tip portion of the blade toward the base. Fig. 3 shows the force acting on the cross-sectional surface of the blade. A fine direction and a feather direction are indicated as the directions of rotational changes of the pitch angle θ by arrows 301 in the drawing.

In this embodiment, the blade 101 rotates from right to left in the drawing (in the -Z-direction in the coordinates of the drawing), and the vibration direction of the wind power generation apparatus 100 is the vertical direction in the drawing (the X-direction in the coordinates of the drawing). The wind velocity V and the rotation speed N of the blade 101 cause a relative current 302 on the cross-sectional surface of the blade 101 as shown in Fig. 3, and a lift force L and a drag force D are generated in accordance with the angle between the blade chord 303 and the flow direction of the relative current 302, or the attack angle α. Accordingly, the pitch angle θ that is the angle between the rotational plane 304 of the blade 101 and the flow direction of the relative current 302 is changed, so that the lift force L and the drag force D can be changed. Also, as the lift force L is changed, the conversion efficiency at the time when wind power is converted into torque by the rotor 103 is changed. The pitch angle with which the efficiency of conversion of wind power to torque is the highest is called "full fine", and the pitch angle with which the efficiency of conversion to torque is the lowest, and the drag force acting on the windmill is the smallest is called "full feather". The pitch angle of the windmill is set at full fine or full feather depending on purposes. The above mentioned "being set at full fine or full feather" does not mean that the pitch angle is to be set exactly at full fine or full feather. For example, due to a small change caused in pitch angle by wind, or due to an error of installation of the blade, the pitch angle may be set at an angle slightly different from full fine or full feather. The terms "almost full fine" and "almost full feather" mean angles slightly different from full fine and full feather. In the embodiments, "full fine" and "full feather" do not exclude "almost full fine" and "almost full feather".

The component force of the lift force L and the drag force D in the vibration direction (X-direction) is the thrust force T generated in the wind power generation apparatus 100. Vibration in the X-direction is generated by this thrust force T. Particularly, when the thrust force T changes, vibration is generated.

The thrust force T can be expressed as a function of the pitch angle θ, the rotation speed N, and the wind velocity V, as can be seen from Fig. 3. Normally, this thrust force T changes with θ, N, and V, and can be expressed with a function $C_t$ called a thrust coefficient as shown below.

[Mathematical Formula 1]

$$T = \frac{1}{2}\rho A V^2 C_t(\theta,\ \lambda)$$

In Mathematical Formula 1, ρ represents the density of air, and A represents the wind receiving area of the rotor 103 and is a constant value. Also, λ represents the peripheral speed ratio, and is expressed with the radius R of the rotor 103 as shown below.

[Mathematical Formula 2]

$$\lambda = \frac{NR}{V}$$

In a case where the peripheral speed ratio $\lambda$ is made constant so as to draw attention to the relationship between the pitch angle $\theta$ and the thrust force T, the thrust coefficient $C_t$ can be assumed to be a function of only the pitch angle $\theta$, or can be expressed as: $C_t = C_t(\theta)$. Further, where Mathematical Formula 1 is temporally differentiated so as to grasp temporal variation in the thrust force T, Mathematical Formula 3 shown below is obtained.

[Mathematical Formula 3]

$$\frac{dT}{dt} = \frac{1}{2}\rho A \left\{ 2VC_t(\theta) + V^2 \frac{dC_t(\theta)}{dt} \right\}$$

The relationship between the thrust coefficient $C_t$ and the pitch angle $\theta$ is normally not a linear relationship. In this example, however, $C_t$ and $\theta$ are proportional to each other for ease of explanation, and the proportional constant $K_t$ is assumed to be expressed as in $C_t = K_t\theta$. Further, the right side of Mathematical Formula 3 is modified, to indicate the relationship with the pitch angular velocity $\omega$.

[Mathematical Formula 4]

$$\frac{dT}{dt} = \frac{1}{2}\rho A \left\{ 2VC_t(\theta) + V^2 \frac{dC_t(\theta)}{d\theta} \frac{d\theta}{dt} \right\} = \frac{1}{2}\rho A \{2VK_t\theta + V^2 K_t\omega\}$$

Here, the relationships, $C_t = K_t\theta$, $dC_t/d\theta = K_t$, and $d\theta/dt = \omega$, are substituted into the rightmost side. As shown in Mathematical Formula 4, the variation rate dT/dt of the thrust force T to be the vibration source is proportional to the pitch angular velocity $\omega$. Further, the pitch angular velocity $\omega$ is multiplied by the square of the wind velocity. Therefore, so as to effectively reduce generation of vibration, the upper limit value $\omega_{max}$ should be put on the pitch angular velocity $\omega$ in accordance with the wind velocity V at the time when the pitch angle changes, so that the variation rate dT/dt of the thrust force is restricted to values not greater than a certain value.

(Relationship Between the Means and the Effects of the Invention)

In this embodiment, the pitch angular velocity control unit 202 determines the upper limit value $\omega_{max}$ of the pitch angular velocity in accordance with the wind velocity V, and changes the pitch angle $\theta$ of the blades 101 toward the pitch angle target value $\theta^*$ at an angular velocity that does not exceed $\omega_{max}$. Accordingly, the variation rate dT/dt of the thrust force that will cause vibration can be restricted to values not higher than a certain value, and generation of vibration in the wind power generation apparatus 100 can be reduced. Meanwhile, limiting the pitch angular velocity $\omega$ might limit the response characteristics of pitch angle control. Therefore, it is preferable to put the upper limit value $\omega_{max}$ on the pitch angular velocity $\omega$ only at a time when there is a pitch angle change that will cause vibration.. "A time when there is a pitch angle change that will cause vibration" is a time when the pitch angle change amount $\delta\theta$ is beyond the pitch angle variable range (angles between full feather and full fine), for example. Since the pitch angle change amount $\delta\theta$ is large at this point, the pitch angular velocity $\omega$ might be increased to the maximum value determined by the mechanical characteristics of the pitch actuator 107, and increase the variation rate in the thrust force. Therefore, when the pitch angle change amount $\delta\theta$ output from the pitch angle target value calculating unit 201 becomes equal to or larger than a predetermined value, the upper limit value $\omega_{max}$ is put on the pitch angular velocity $\omega$ in accordance with the wind velocity V at a time when the pitch angle changes, to limit the pitch angular velocity $\omega$. The pitch angle variable range in this embodiment is approximately 90 degrees. For example, when the pitch angle change amount $\delta\theta$ is equal to or larger than 10% (9 degrees) of the variable range, the pitch angular velocity control unit 202 sets an upper limit value on the pitch angular velocity.

According to Mathematical Formula 4, the variation rate dT/dt of the thrust force T that will cause vibration is proportional to the wind velocity V (or the square of the wind velocity V). That is, as the pitch angular velocity control unit 202 determines the upper limit value $\omega_{max}$ of the pitch angular velocity in accordance with the latest wind velocity V, the degree of freedom in restraining increase in the thrust force variation rate dT/dt can be increased. According to Mathematical Formula 4, the wind velocity V and the pitch angular velocity $\omega$ are the causes of increase in the variation rate dT/dt of the thrust force T. Therefore, there is a tendency that, if the upper limit value $\omega_{max}$ of the pitch angular velocity $\omega$ is made smaller as the wind velocity V becomes higher, generation of vibration can be effectively restrained. As for some specific wind velocity, however, the upper limit value $\omega_{max}$ of the pitch angular velocity $\omega$ is not necessarily made smaller as the wind velocity becomes higher.

In this embodiment, the mean wind velocity during a predetermined period of time (several minutes, for example) is used as the wind velocity to be used in the control operation. However, the wind velocity while the pitch angle is changing greatly varies depending on the rate of change (gradient) in the wind velocity in a predetermined period of time. Therefore, it is preferable to perform control in accordance with the rate of change in the wind velocity in a predetermined period of time, because the rate of change in the wind velocity can also be taken into consideration. However, the wind velocity of each moment may be used as the wind velocity to be used in the control operation.

(Generation of Vibration at a Start of Rotation of the Blades of the Windmill or at a Start of Power Generation)

The following is a description of a technique of reducing generation of vibration at a start of rotation of the blades of the windmill or at a start of power generation that might increase the pitch angle change amount $\delta\theta$, using the above described principles.

(Description of a Start of Blade Rotation and a Start of Power Generation)

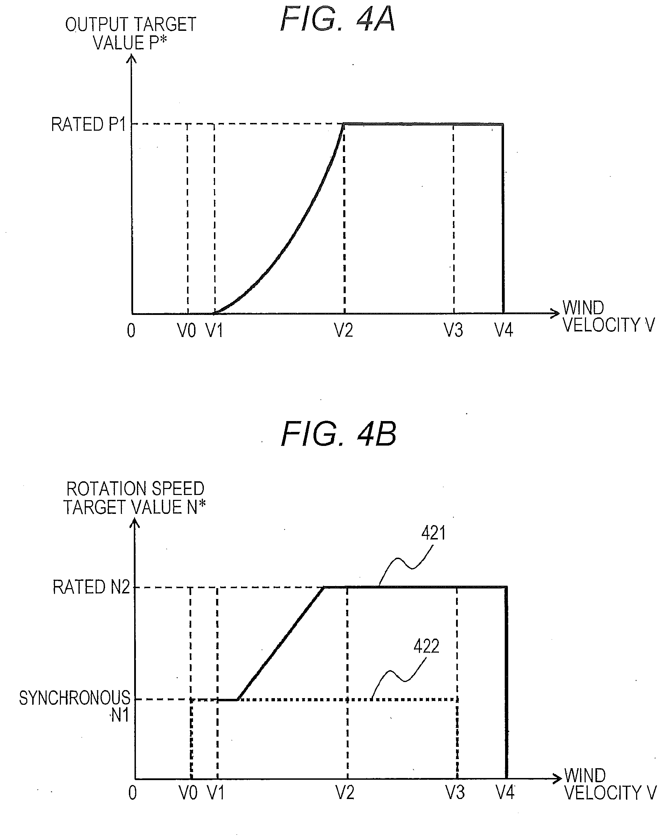

Referring first to Figs. 4A and 4B, the operation of the wind power generation apparatus 100 to start power generation is described.

Fig. 4A shows the output target value P* of the wind power generation apparatus 100 with respect to the wind velocity V detected by the anemometer 110, and is a graph called a "power curve".

Fig. 4B shows the rotation speed target value N* of the wind power generation apparatus 100 with respect to the wind velocity V detected by the anemometer 110. In the drawing, the solid line 421 indicates the rotation speed target value for outputting the output target value P*, and the thick dashed line 422 indicates the rotation speed target value (a synchronous rotation speed target value N1) in the power generation starting operation.

As for the symbols used in the drawings, P1 represents the rated output of the wind power generation apparatus 100, V0 represents the wind velocity (a first blade rotation starting wind velocity) at which the pitch angle starts changing as the blades 101 start rotating in a state where wind is below the power generation range, V1 represents the lowest wind velocity (the cut-in wind velocity) at which the wind power generation apparatus 100 generates power, V2 represents the wind velocity (the rated wind velocity) at which the output P reaches the rated output P1, and V4 represents the highest wind velocity (the cut-out wind velocity) at which the wind power generation apparatus 100 generates power. V3 represents the highest wind velocity (a second blade rotation starting wind velocity) at which the wind power generation apparatus 100 again starts the power generation starting operation in a case where the wind velocity V becomes equal to or higher than the cut-out wind velocity V4, the wind power generation apparatus 100 temporarily stops generating power, the blades stops rotating, and the wind velocity V then becomes lower, for example. The upper limit value of the pitch angular velocity at a time when the wind velocity reaches the first blade rotation starting wind velocity (or when the wind velocity increases) in a state where the blades are not actually rotating is larger than the upper limit value at a time when the wind velocity reaches the second blade rotation starting wind velocity (or when the wind velocity drops) in a state where the blades are not actually rotating. This is because, in the latter case, the wind velocity is higher, and the rotation speed of the blades might increase rapidly, to cause vibration. Furthermore, in the latter case, as the wind velocity is high, the rotation speed can be sufficiently increased, even if there is a slight change in the pitch angle.

The above mentioned "power generation starting operation" is an operation to be performed between a time when the wind power generation apparatus 100 is not performing power generation (generating electric power from wind energy, and outputting the electric power to the system or the like) and a start of power generation (the power generator is connected to the power system, for example). Specifically, in this operation, when the pitch angle of the blades is maintained at the full feather angle, and the blades are not rotating, the pitch angle is changed in the fine direction, so as to start capturing wind energy, increase the rotation speed N of the rotor 103, and set the rotation speed N at the synchronous rotation speed N1 of the power generator 106. The synchronous rotation speed N1 is the minimum rotation speed at which the power generator 106 can be connected. It should be noted that "where the blades are not rotated" and "where the rotation of the blades has stopped" do not necessarily mean that the blades are completely still, and do not exclude cases where the rotation angle is slightly changed by wind, or the blades have a low rotation speed of idling at a time of strong wind, for example.

The pitch angle target value calculating unit 201 in this embodiment has at least a function control the pitch angle target value during a power generation starting operation, and a function to control the pitch angle target value during power generation. The pitch angle target value calculating unit 201 can select the two functions based on wind velocity.

When the wind velocity V is lower than V0, the wind power generation apparatus 100 cannot obtain sufficient energy to perform the power generation starting operation, and therefore, stops operating without performing power generation. The pitch angle θ at that time is maintained at full feather. When the wind velocity V increases to V0 from a lower velocity than V0, the pitch angle target value calculating unit 201 selects the pitch angle target value calculating unit for a power generation starting operation, and performs the power generation starting operation. Specifically, so as to start the rotor 103 to rotate, the pitch angle.is moved from full feather toward fine, and wind energy is captured. The pitch angle is then controlled so that the rotation speed becomes the synchronous rotation speed N1.

When the pitch angle is moved from full feather to fine, the thrust force is changed by the change in the energy obtained from wind, and, as a result, exciting force is generated.

Since the pitch angle change in the fine direction is started in the position of full feather, which is the maximum angle in the feather direction, the amount of change in the pitch angle until the pitch angle reaches the pitch angle target value set in the fine direction tends to be large. Since the amount of change in the pitch angle is large, the pitch angular velocity might be increased to the maximum pitch angular velocity determined by the mechanical characteristics of the pitch actuator 107. Meanwhile, the thrust force variation expressed by Mathematical Formula 4 increases with the product of the square of the wind velocity V and the pitch angular velocity. Therefore, setting the upper limit value on the pitch angular velocity in accordance with wind velocity and limiting the pitch angular velocity is effective for reducing the thrust force variation that will cause vibration. Therefore, when the pitch angle changes at a start of rotation, the upper limit value $\omega_{max}$ of the pitch angular velocity is determined in accordance with the wind velocity V immediately before the start of the change in the pitch angle, and the pitch angular velocity is restricted to values equal to or lower than the upper limit value. With this, when the rotor 103 starts rotating, generation of vibration during the movement of the pitch angle in the fine direction from full feather can be reduced. Also, the upper limit value of the pitch angle change rate of the blades can be set in accordance with the wind velocity immediately before the pitch angle starts changing so as to perform effective focusing, only when the pitch angle is changed from a full feather state.

Depending on wind conditions, the pitch angle might change in the feather direction after starting to change in the fine direction from full feather while the rotation speed of the rotor is not sufficiently increased. The change in the pitch angle does not stop temporarily, and the rotation speed of the rotor is again increased. Therefore, the pitch angle might again change in the fine direction. The amount of change in the pitch angle at the time when the pitch angle again changes in the fine direction might be large. However, the pitch angle continuously changes, and it is difficult to clearly specify the discontinuous point of time when the pitch angle started changing. In such a case, the upper limit value $\omega_{max}$ of the pitch angular velocity may be determined in accordance with the wind velocity V at a time when the moving direction of the pitch angle switches from the feather direction to the fine direction. That is, the upper limit value of the pitch angle change rate may be set in accordance with the wind velocity immediately before the direction of change in the pitch angle changes. In this manner, generation of vibration can be reduced in accordance with the wind velocity that changes by the second.

Through the power generation starting operation, the rotation speed of the power generator 106 reaches the synchronous rotation speed N1. If the wind velocity is not lower than V1, the wind power generation apparatus 100 starts power generation (connects the power generator 106 to the system). While the wind velocity is in the range of V1 to V4 after the power generation is started, the pitch angle target value calculating unit 201 selects the pitch angle target value control function for power generation, and the rotation speed target value N* of the power generator 106 is changed from the dashed line 422 to the solid line 421 shown in Fig. 4B. The output target value of the power generator 106 is set at the output target value P* corresponding to the wind velocity V. There is a possibility that the amount of change in the pitch angle will increase with changes in the target value at a start of power generation. Particularly, if both the rotation speed target value N* and the output target value P* at a start of power generation greatly differ from the target value during the power generation starting operation, the pitch angle that controls the energy to be obtained from wind might greatly change before and after the discontinuous point of time when power generation is started. Since the amount of change in the pitch angle is large, the pitch angular velocity might be increased to the maximum pitch angular velocity determined by the mechanical characteristics of the pitch actuator 107. When the pitch angular velocity reaches the maximum value, regardless of the wind velocity, the thrust force variation that will cause generation of vibration might become larger, as described above. Therefore, after a start of power generation and until the power generator reaches the rotation speed target value, the upper limit value $\omega_{max}$ of the pitch angular velocity is determined in accordance with the wind velocity V immediately before the start of the power generation. With this, generation of vibration due to adjustment of the pitch angle after a start of power generation can be reduced. However, depending on wind conditions after a start of power generation, it might not be immediately after a start of power generation when the pitch angle greatly changes as described above. Therefore, as described above, the upper limit value $\omega_{max}$ of the pitch angular velocity may be determined in accordance with the wind velocity V at a time when the moving direction of the pitch angle switches.

When the wind velocity becomes V4 or higher after a start of power generation, the pitch angle θ moves toward full feather, and the rotation speed is lowered, so as to maintain security of the windmill. After that, the power generation is stopped.

Meanwhile, there is another case where a power generation starting operation is performed. In a case where the wind velocity drops from a high wind velocity of V4 or higher to the second blade rotation starting wind velocity V3, a power generation starting operation is also performed. In this case, the pitch angle target value calculating unit 201 also selects the pitch angle target value calculating unit for a power generation starting operation, and controls the pitch angle so that the rotation speed becomes the synchronous rotation speed N1. In this case, when the pitch angle changes at a start of rotation, the upper limit value $\omega_{max}$ of the pitch angular velocity is also determined in accordance with the wind velocity V immediately before the start of the change in the pitch angle, and the pitch angular velocity is restricted to values equal to or lower than the upper limit value. Also, as described above, the upper limit value $\omega_{max}$ of the pitch angular velocity may be determined in accordance with the wind velocity V at a time when the moving direction of the pitch angle switches.

After the blade rotation speed reaches the synchronous rotation speed N1, power generation is started. After switching to the pitch angle target value calculating unit for power generation, the pitch angle target value calculating unit 201 controls the pitch angle based on the output target value P* with respect to the wind velocity V. After a start of power generation and until the blade reaches the rotation speed target value or the power generator reaches the output target value, the upper limit value $\omega_{max}$ of the pitch angular velocity is determined in accordance with the wind velocity V immediately before the start of the power generation. Also, as described above, the upper limit value $\omega_{max}$ of the pitch angular velocity may be determined in accordance with the wind velocity V at a time when the moving direction of the pitch angle switches. Further, at a start of rotation and at a start of power generation, the upper limit value of the pitch angle change rate becomes smaller as the wind velocity becomes higher, regardless of the moving direction of the pitch angle.

(Differences to be Made by Application of the Present Invention)

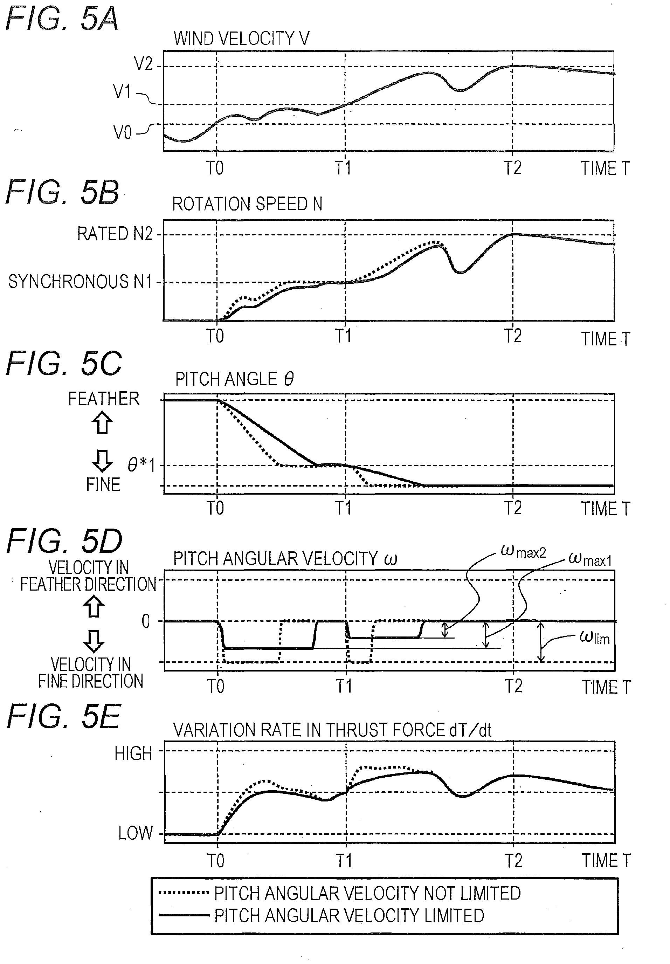

Referring now to Figs. 5A through 5E, examples where the method of restricting the pitch angular velocity according to the present invention in the above described power generation starting operation are described.

Figs. 5A through 5E show temporal changes in the rotation speed, the pitch angle, and the pitch angular velocity of the wind power generation apparatus 100 of this embodiment when the wind velocity V changes. Fig. 5A is an example of temporal variation in the wind velocity V. Fig. 5B shows a temporal change in the rotation speed N when the wind velocity V changes. Fig. 5C shows a temporal change in the pitch angle θ when the wind velocity V changes. Fig. 5D shows a temporal change in the pitch angular velocity ω when the pitch angle θ changes. Fig. 5E shows a temporal change in the variation rate dT/dt in the thrust force. The wind velocities V0, V1, and V2 are the same as the those described above with reference to Figs. 4A and 4B. In each of Figs. 5B through 5E, the dashed line indicates a case where the pitch angular velocity control unit 202 is not used, and the solid line indicates a case where the pitch angular velocity control unit 202 is used.

As shown in Figs. 5, when the wind velocity V reaches the first blade rotation starting wind velocity V0 at T0 while the blades are not rotating, the pitch angle target value calculating unit 201 starts a power generation starting operation, and outputs a pitch angle target value θ*1. In accordance with the target value θ*1, the pitch actuator 107 moves the pitch angle θ, which is maintained in the full feather state, in the fine direction.

In the case where the pitch angular velocity control unit 202 is not used, any particular upper limit value is not set on the pitch angular velocity, and therefore, the pitch angular velocity is increased to a pitch angular velocity $\omega_{lim}$ determined by the mechanical characteristics or the like of the pitch actuator 107. As a result, thrust force variation corresponding to the value of $\omega_{lim}$ is caused in the wind power generation apparatus 100, as shown in Fig. 5E.

In the case where the pitch angular velocity control unit 202 is used, on the other hand, the pitch angular velocity is restricted to values equal to or lower than an upper limit value $\omega_{max1}$ ($< \omega_{lim}$), and accordingly, the thrust force variation proportional to the pitch angular velocity can be restricted to values equal to or lower than a certain value. Thus, generation of vibration of the wind power generation apparatus 100 can be reduced.

In Figs. 5, the upper limit value $\omega_{max}$ of the pitch angular velocity is maintained at a constant value while the pitch angle is changing. The upper limit value $\omega_{max}$ of the pitch angular velocity may be changed when appropriate. However, if the upper limit value $\omega_{max}$ is frequently changed, the pitch actuator 107 is fatigued. Therefore, the upper limit value $\omega_{max}$ of the pitch angular velocity may be calculated when the pitch angle changes, and the calculated value may be maintained for a certain period of time. In this embodiment, the upper limit value $\omega_{max1}$ of the pitch angular velocity determined at T0 is maintained during the power generation starting operation.

Further, in the example illustrated in Figs. 5, at T1, the rotation speed reaches the synchronous rotation speed N1, the wind velocity reaches V1, and the power generator is connected to the system, to start power generation. At this point, the pitch angle θ further moves in the fine direction in accordance with the wind velocity.

In the case where the pitch angular velocity control unit 202 is not used, thrust force variation equivalent to the value of $\omega_{lim}$ is caused in the wind power generation apparatus 100 at this point, as described above. Further, according to Mathematical Formula 3, the wind velocity V1 at this point is higher than V0, and therefore, a larger thrust force variation than that caused by the pitch angle adjustment at T0 is caused by the pitch angle adjustment at T1.

In the case where the pitch angular velocity control unit 202 is used as indicated by the solid line, on the other hand, the pitch angular velocity is restricted to values equal to or lower than an upper limit value $\omega_{max2}$, to reduce generation of vibration. In addition to that, the upper limit value of the pitch angular velocity can be determined in accordance with the wind velocity V. Accordingly, the upper limit value $\omega_{max2}$ of the pitch angular velocity during the pitch angle adjustment at T1 when the wind velocity is V1 (> V0) can be made smaller than the upper limit value $\omega_{max1}$ of the pitch angular velocity during the pitch angle adjustment at T0 when the wind velocity is V0. With this, the thrust force variation proportional to the wind velocity V and the pitch angular velocity ω can be restricted to values equal to or smaller than a certain value, and generation of vibration of the wind power generation apparatus 100 can be reduced.

Likewise, in the power generation starting operation at the second blade rotation starting wind velocity V3, an upper limit value is also set on the pitch angular velocity, so that generation of vibration can be reduced. At this point, the second blade rotation starting wind velocity V3 is higher than the first blade rotation starting wind velocity V0 (V3 > V0). Therefore, it is effective that the upper limit value $\omega_{maxV3}$ of the pitch angular velocity at a start of second blade rotation is made smaller than the upper limit value $\omega_{maxV0}$ of the pitch angular velocity at a start of first blade rotation.

Further, in each power generation starting operation at V0 and V3, the pitch angle starts changing in the full feather position. Therefore, the change amount δθ (δθ = θ* - θ), which is the angle difference between the current pitch angle θ and the pitch angle target value θ*, tends to become larger. As the operating time of the pitch actuator 107 (or the time during which acceleration is possible) becomes longer accordingly, there is a higher possibility that the pitch angular velocity will reach the upper limit value. In view of this, it is particularly effective that the pitch angular velocity control unit 202 determines the upper limit value $\omega_{max}$ of the pitch angular velocity at the start of the power generation starting operation, and sets an upper limit value on the pitch angular velocity during the power generation starting operation.

As described above, rotation is started when wind becomes stronger from a calm state (or when the wind velocity gradually increases from a smaller velocity than V0), or rotation is started when wind becomes smaller after rotation of the blades is stopped to protect the windmill from strong wind (or when the wind velocity drops to V3 from a higher velocity than V3). In the former case, for the rotor to reach the rated rotation speed, the pitch angle is highly likely to be moved from full feather to full fine. In the latter case, on the other hand, the possibility that the wind is strong enough to achieve the rated rotation speed is high even when the pitch angle is not moved to full fine. In this case, when the pitch angle is moved from full feather toward the full fine side but does not reach full fine, the rotor reaches the rated rotation speed. According to Mathematical Formula 4, the variation rate dT/dt in the thrust force T is proportional to both ω and V (or the square of V). In a case where wind becomes weaker while rotation of the blades is stopped to protect the windmill from strong wind, the wind velocity V is normally higher than that in a case where wind becomes stronger from a calm state to start rotation. Therefore, so as to reduce the variation rate dT/dt in the thrust force T, it is necessary to reduce the pitch angle change rate ω. With the power generation efficiency of the windmill being taken into account, the rotor preferably reaches the rated rotation speed in the shortest possible time from a start of rotation. In a case where wind becomes weaker while rotation of the blades is stopped to protect the windmill from strong wind, the necessary amount of change (from full feather) in the pitch angle to achieve the rated rotation speed is smaller than that in a case where wind becomes stronger from a calm state to start rotation. Accordingly, the rated rotation speed can be achieved in a reasonably short time, even if the pitch angle change rate ω is made lower. Thus, the variation in the thrust force T can be effectively reduced, even if the time required for the rotor to reach the rated rotation speed is not greatly shortened. As the variation in the thrust force T is reduced, or as vibration is reduced, higher reliability can be realized. Specifically, fatigue of the windmill components can be reduced, and durability of the windmill components can be increased, for example. Also, the costs for reinforcing the windmill components can be lowered, and a wind power generation apparatus that is more economically efficient can be realized.

In a case where an active vibration control unit that controls a sensed vibration acceleration is used, exciting force might be generated, if the pitch angle is moved so as to start rotation of the blades of the windmill while the windmill is not vibrating, for example. After vibration is generated by the exciting force, the vibration can be controlled to some degree by the sensed vibration acceleration. After the vibration control, there is a possibility that exciting force is again generated so as to move the pitch angle and resume power generation or the like. Therefore, there remains the possibility that vibration generation and a vibration control operation are repeated. According to this embodiment, on the other hand, an upper limit value is set on the pitch angle change rate in accordance with the wind velocity immediately before a start of rotation or a start of power generation, so that vibration is not generated. Accordingly, the repetition of vibration generation and a vibration control operation can be prevented. During a control operation prior to generation of steady-state vibration or particularly at a discontinuous point of time when the blades start rotating or power generation is started, the vibration acting on the wind power generation apparatus greatly changes. Accordingly, a reduction of the vibration at this point contributes to an increase in the reliability of the wind power generation apparatus.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

**Claims**

**1.** A wind power generation apparatus (100) comprising
a blade (101) configured to rotate when receiving wind,
wherein the blade (101) changes a pitch angle change rate, using a pitch angle change rate command value correlated to a difference between a pitch angle target value and a current pitch angle,
wherein, to change the pitch angle when the pitch angle change rate command value becomes a predetermined value or higher, an upper limit value is set on the pitch angle change rate of the blade (101) in accordance with a wind velocity,
**characterized in that**,
when the pitch angle is to be changed from a substantially full feather state, the upper limit value is set on the pitch angle change rate of the blade (101) in accordance with the wind velocity immediately before the pitch angle starts changing.

**2.** The wind power generation apparatus (100) according to claim 1, wherein, only when the pitch angle is to be changed from a substantially full feather state, the upper limit value is set on the pitch angle change rate of the blade (101) in accordance with the wind velocity immediately before the pitch angle starts changing.

**3.** The wind power generation apparatus (100) according to claim 1, wherein
the wind velocity immediately before the pitch angle starts changing is lower than a cut-in wind velocity in some cases, and is higher than the cut-in wind velocity in other cases,
the lower wind velocity is a first blade rotation starting wind velocity,
the higher wind velocity is a second blade rotation starting wind velocity, and
the upper limit value at a time when the blade (101) reaches the first blade rotation starting wind velocity from a substantially non-rotating state is greater than the upper limit value at a time when the blade reaches the second blade rotation starting wind velocity from a substantially non-rotating state.

**4.** The wind power generation apparatus (100) according to claim 1, further comprising
a power generator (106) configured to generate electric power while the blade (101) is rotating,
wherein, when the pitch angle is to be changed after the power generator (106) is connected and before one of a rotation speed of the blade (101) and a rotation speed of the power generator (106) reaches a rotation speed target value for power generation, the upper limit value is set on the pitch angle change rate of the blade (101) in accordance with the wind velocity immediately before the power generator (106) is connected.

**5.** The wind power generation apparatus (100) according to claim 1, wherein, when the pitch angle is to be changed, the upper limit value is set on the pitch angle change rate of the blade (101) in accordance with the wind velocity immediately before a direction of change in the pitch angle changes.

**6.** The wind power generation apparatus (100) according to claim 1, wherein, as the wind velocity becomes higher, the upper limit value becomes smaller.

**7.** The wind power generation apparatus (100) according to claim 1, wherein the wind velocity is a mean wind velocity during a predetermined period of time.

**8.** The wind power generation apparatus (100) according to claim 1, wherein the wind velocity at a time when the pitch angle is changed is determined from the latest wind velocity.

**Patentansprüche**

1. Windkrafterzeugungsvorrichtung (100), die Folgendes umfasst:

   ein Rotorblatt (101), das konfiguriert ist, sich zu drehen, wenn es Wind aufnimmt,
   wobei das Rotorblatt (101) eine Einstellwinkeländerungsgeschwindigkeit unter Verwendung eines Einstellwinkeländerungsgeschwindigkeitsbefehlswerts, der mit einer Differenz zwischen einem Einstellwinkel-Sollwert und einem Ist-Einstellwinkel in Beziehung steht, ändert,
   wobei, um den Einstellwinkel zu ändern, dann, wenn der Einstellwinkeländerungsgeschwindigkeitsbefehlswert einen vorbestimmten Wert erreicht oder übersteigt, ein oberer Grenzwert für die Einstellwinkeländerungsrate des Rotorblatts (101) entsprechend einer Windgeschwindigkeit festgelegt wird,
   **dadurch gekennzeichnet, dass**
   dann, wenn der Einstellwinkel von einem Zustand mit im Wesentlichen vollkommener Fahnenstellung geändert werden soll, der obere Grenzwert für die Einstellwinkeländerungsgeschwindigkeit des Rotorblatts (101) entsprechend der Windgeschwindigkeit unmittelbar bevor der Einstellwinkel beginnt, sich zu ändern, festgelegt wird.

2. Windkrafterzeugungsvorrichtung (100) nach Anspruch 1, wobei nur dann, wenn der Einstellwinkel von einem Zustand mit im Wesentlichen vollkommener Fahnenstellung geändert werden soll, der obere Grenzwert für die Einstellwinkeländerungsgeschwindigkeit des Rotorblatts (101) entsprechend der Windgeschwindigkeit unmittelbar bevor der Einstellwinkel beginnt, sich zu ändern, festgelegt wird.

3. Windkrafterzeugungsvorrichtung (100) nach Anspruch 1, wobei
   die Windgeschwindigkeit unmittelbar bevor der Einstellwinkel beginnt, sich zu ändern, in einigen Fällen geringer als eine Einsatzwindgeschwindigkeit ist und in anderen Fällen höher als eine Einsatzwindgeschwindigkeit ist,
   die geringere Windgeschwindigkeit eine erste Rotorblattdrehstartwindgeschwindigkeit ist,
   die höhere Windgeschwindigkeit eine zweite Rotorblattdrehstartwindgeschwindigkeit ist, und
   der obere Grenzwert zu einem Zeitpunkt, zu dem das Rotorblatt (101) die erste Rotorblattdrehstartwindgeschwindigkeit aus einem im Wesentlichen nicht drehenden Zustand erreicht, größer ist, als der obere Grenzwert zu einem Zeitpunkt, zu dem das Rotorblatt die zweite Rotorblattdrehstartwindgeschwindigkeit aus einem im Wesentlichen nicht drehenden Zustand erreicht.

4. Windkrafterzeugungsvorrichtung (100) nach Anspruch 1, die ferner Folgendes umfasst:

   einen Leistungsgenerator (106), der konfiguriert ist, elektrische Leistung zu erzeugen, während sich das Rotorblatt (101) dreht,
   wobei dann, wenn der Einstellwinkel geändert werden soll, nachdem der Leistungsgenerator (106) verbunden ist und bevor entweder die Drehzahl des Rotorblatts (101) oder eine Drehzahl des Leistungsgenerators (106) einen Drehzahlzielwert zur Leistungserzeugung erreicht, der obere Grenzwert für die Einstellwinkeländerungsgeschwindigkeit des Rotorblatts (101) entsprechend der Windgeschwindigkeit unmittelbar vor dem Verbinden des Leistungsgenerators (106) festgelegt wird.

5. Windkrafterzeugungsvorrichtung (100) nach Anspruch 1, wobei dann, wenn der Einstellwinkel geändert werden soll, der obere Grenzwert für die Einstellwinkeländerungsgeschwindigkeit des Rotorblatts (101) entsprechend der Windgeschwindigkeit unmittelbar vor einer Änderung einer Änderungsrichtung des Einstellwinkels festgelegt wird.

6. Windkrafterzeugungsvorrichtung (100) nach Anspruch 1, wobei sich der obere Grenzwert verringert, wenn sich die Windgeschwindigkeit erhöht.

7. Windkrafterzeugungsvorrichtung (100) nach Anspruch 1, wobei die Windgeschwindigkeit eine mittlere Windgeschwindigkeit während eines vorbestimmten Zeitraums ist.

8. Windkrafterzeugungsvorrichtung (100) nach Anspruch 1, wobei die Windgeschwindigkeit zu einem Zeitpunkt, zu dem sich der Einstellwinkel ändert, aus der letzten Windgeschwindigkeit bestimmt wird.

**Revendications**

1. Appareil de production d'énergie éolienne (100) comprenant

une pale (101) configurée pour effectuer une rotation lorsqu'elle reçoit du vent, dans lequel la pale (101) modifie un taux de changement d'angle d'attaque, en utilisant une valeur d'ordre de taux de changement d'angle d'attaque en corrélation avec une différence entre une valeur cible de l'angle d'attaque et un angle d'attaque actuel,

dans lequel, afin de changer l'angle d'attaque lorsque la valeur d'ordre du taux de changement d'angle d'attaque devient égale ou supérieure à une valeur prédéterminée, une valeur limite supérieure est fixée pour le taux de changement d'angle d'attaque de la pale (101) en accord avec une vitesse du vent,

**caractérisé en ce que**

lorsqu'il s'agit de changer l'angle d'attaque depuis un état sensiblement entièrement en drapeau, la valeur limite supérieure est imposée sur le taux de changement d'angle d'attaque de la pale (101) en accord avec la vitesse du vent immédiatement avant que l'angle d'attaque commence à changer.

2. Appareil de production d'énergie éolienne (100) selon la revendication 1, dans lequel uniquement lorsqu'il s'agit de changer l'angle d'attaque depuis un état sensiblement entièrement en drapeau, la valeur limite supérieure est imposée sur le taux de changement d'angle d'attaque de la pale (101) en accord avec la vitesse du vent immédiatement avant que l'angle d'attaque commence à changer.

3. Appareil de production d'énergie éolienne (100) selon la revendication 1, dans lequel

la vitesse du vent immédiatement avant que l'angle d'attaque commence à changer est plus faible qu'une vitesse du vent de démarrage dans certains cas, et elle est plus élevée que la vitesse du vent de démarrage dans d'autres cas,

la vitesse inférieure du vent est une première vitesse du vent au démarrage de la rotation de la pale,

la vitesse supérieure du vent est une seconde vitesse du vent au démarrage de la rotation de la pale, et

la valeur limite supérieure à un instant auquel la pale (101) atteint la première vitesse du vent au démarrage de la rotation de la pale à partir d'un état sensiblement sans rotation est supérieure à la valeur limite supérieure à un instant auquel la pale atteint la seconde vitesse du vent au démarrage de la rotation de la pale à partir d'un état sensiblement sans rotation.

4. Appareil de production d'énergie éolienne (100) selon la revendication 1, comprenant en outre

un générateur d'énergie (106) configuré pour générer de l'énergie électrique lorsque la pale (101) est en rotation, dans lequel, lorsqu'il s'agit de changer l'angle d'attaque après que le générateur d'énergie (106) a été connecté et avant qu'une vitesse de rotation parmi la vitesse de rotation de la pale (101) et la vitesse de rotation du générateur d'énergie (106) atteigne une valeur cible de vitesse de rotation pour la génération d'énergie, la valeur limite supérieure est imposée au taux de changement de l'angle d'attaque de la pale (101) en accord avec la vitesse du vent immédiatement avant que le générateur d'énergie (106) a été connecté.

5. Appareil de production d'énergie éolienne (100) selon la revendication 1, dans lequel, lorsqu'il s'agit de changer l'angle d'attaque, la valeur limite supérieure est imposée au taux de changement de l'angle d'attaque de la pale (101) en accord avec la vitesse du vent immédiatement avant qu'une direction de changement de l'angle d'attaque change.

6. Appareil de production d'énergie éolienne (100) selon la revendication 1, dans lequel lorsque la vitesse du vent devient plus élevée, la valeur limite supérieure devient plus faible.

7. Appareil de production d'énergie éolienne (100) selon la revendication 1, dans lequel la vitesse du vent est une vitesse moyenne du vent pendant une période temporelle prédéterminée.

8. Appareil de production d'énergie éolienne (100) selon la revendication 1, dans lequel la vitesse du vent à un instant lorsque l'angle d'attaque est changé est déterminée à partir de la vitesse du vent la plus récente.

# FIG. 1

## FIG. 2

CURRENT PITCH ANGLE
$\theta$

OUTPUT TARGET VALUE,
ROTATION SPEED TARGET VALUE
$P^*, N^*$

OUTPUT P
ROTATION SPEED N
WIND VELOCITY V

$P^*, N^*$

PITCH ANGLE
TARGET VALUE
CALCULATOR

$\theta^*$

$\theta$

$\theta^*$

$\theta^* +$ $\delta\theta$

$-$

$\theta^*$ PITCH ANGLE
TARGET VALUE

201

$\delta\theta$

V

PITCH ANGULAR
VELOCITY UPPER LIMIT
VALUE CALCULATOR

$\omega_{max}$

PITCH ANGULAR VELOCITY

$\omega$

$\omega$ LIMITER $\omega^*$ PITCH ANGULAR
VELOCITY
COMMAND VALUE

202

111

EP 3 054 152 B1

# FIG. 3

## FIG. 4A

OUTPUT TARGET
VALUE P*

RATED P1

WIND
VELOCITY V

0    V0 V1        V2        V3  V4

## FIG. 4B

ROTATION SPEED
TARGET VALUE N*

RATED N2

421

422

SYNCHRONOUS
N1

WIND
VELOCITY V

0    V0 V1        V2        V3  V4

17

*FIG. 5A*

WIND VELOCITY V

V2

V1

V0

T0          T1          T2          TIME T

*FIG. 5B*

ROTATION SPEED N

RATED N2

SYNCHRONOUS N1

T0          T1          T2          TIME T

*FIG. 5C*

PITCH ANGLE $\theta$

FEATHER

⇑

⇓  $\theta*1$

FINE

T0          T1          T2          TIME T

*FIG. 5D*

PITCH ANGULAR VELOCITY $\omega$

$\omega_{max2}$  $\omega_{max1}$

VELOCITY IN
FEATHER DIRECTION

⇑

0

⇓

VELOCITY IN
FINE DIRECTION

$\omega_{lim}$

T0          T1          T2          TIME T

*FIG. 5E*

VARIATION RATE IN THRUST FORCE dT/dt

HIGH

LOW

T0          T1          T2          TIME T

```
·········  PITCH ANGULAR VELOCITY NOT LIMITED
─────────  PITCH ANGULAR VELOCITY LIMITED
```

**EP 3 054 152 B1**

**REFERENCES CITED IN THE DESCRIPTION**

**Patent documents cited in the description**

- WO 0583266 A
- US 20140297052 A1
- US 20120087792 A1
- US 20100303622 A1
- EP 2292928 A2